Europäisches Patentamt

European Patent Office

Office européen des brevets

(19)

(11) Veröffentlichungsnummer : **0 097 653**
**B1**

(12) **EUROPÄISCHE PATENTSCHRIFT**

(45) Veröffentlichungstag der Patentschrift :
09.10.85

(51) Int. Cl.⁴ : **F 24 D   3/00, F 24 D   5/10**

(21) Anmeldenummer : 82902443.9

(22) Anmeldetag : 03.08.82

(86) Internationale Anmeldenummer :
**PCT/EP 82/00162**

(87) Internationale Veröffentlichungsnummer :
**WO/8300544 (17.02.83 Gazette 83/05)**

(54) **ANLAGE ZUM TEMPERIEREN EINES RAUMES.**

(30) Priorität : 04.08.81 AT 3443/81
04.05.82 AT 1747/82

(43) Veröffentlichungstag der Anmeldung :
**11.01.84 Patentblatt 84/02**

(45) Bekanntmachung des Hinweises auf die Patenterteilung : **09.10.85 Patentblatt 85/41**

(84) Benannte Vertragsstaaten :
**BE CH DE FR GB LI NL SE**

(56) Entgegenhaltungen :
AT-B-   359 696
CH-A-   617 999
DE-A- 1 929 529
DE-A- 2 604 782
FR-A- 2 201 447
FR-A- 2 373 026

(73) Patentinhaber : **FENNESZ, Manfred**
**Damböckgasse 4**
**A-1060 Wien (AT)**

(72) Erfinder : **FENNESZ, Manfred**
**Damböckgasse 4**
**A-1060 Wien (AT)**

(74) Vertreter : **Büchel, Kurt F., Dr.**
**Austrasse 4**
**FL-9490 Vaduz (LI)**

## Beschreibung

Die Erfindung bezieht sich auf eine Anlage zum Temperieren eines Raumes, mit wenigstens zwei in einer Wandung des Raumes, insbesondere im Fußboden, vorgesehenen Kanalräumen und einem in wenigstens einem Kanalraum verlaufenden Heiz- und/oder Kühlstrang, wobei Luft durch diese Kanalräume umwälzbar ist.

Eine derartige Anlage ist aus der AT-B-359 696 bekannt geworden. Obwohl sich diese AT-B speziell auf eine Strahlungs- und Konvektionsheizung bezieht, versteht sich doch, daß dabei der Begriff « Heizung » im allgemeinsten Sinne zu verstehen ist, nämlich im Sinne einer Einrichtung, mit deren Hilfe es möglich ist, die Raumtemperatur auf einem vorbestimmten Niveau zu halten. Dieses Temperaturniveau kann unterhalb der Außentemperatur liegen, wenn etwa durch einen rohrförmigen Heizstrang statt eines Heizmediums, wie Heißwasser oder Dampf, ein Kühlmittel, z. B. Kaltwasser, hindurchgeleitet wird.

Ferner bezieht sich die genannte AT-B speziell auf eine Fußbodenheizung, doch ist daran nur wesentlich, daß ein Temperierungsraum, in dem die eigentliche Anlage untergebracht ist, mit dem zu temperierenden Raum in Konvektionsverbindung steht, so daß die Anlage in äquivalenter Weise in einer Seitenwand oder auch in der Decke des Raumes untergebracht sein kann. Dabei kann die Konvektionsverbindung ebensogut direkt, wie indirekt bestehen, d. h. es kann einer der Mündungen des Kanales etwa in einen Nachbarraum führen, von wo ein Temperaturausgleich dann über offene Türen oder sonstige Öffnungen erfolgt. Obwohl eine Umwälzung von Frischluft im Rahmen dieser At-B nicht vorgesehen ist, kann gegebenenfalls ein gewisser Anteil davon der Raumluft beigemengt werden, was u. a. insbesondere für die Einhaltung von baubehördlichen und/oder gewerbepolizeilichen Vorschriften wesentlich sein kann.

Einer der Vorteile dieser bekannten Temperierungsanlage liegt darin, daß die Wärmeabfuhr vom Heizstrang in den Raum (bzw. umgekehrt) rascher und verlustärmer erfolgt. Die Geschwindigkeit des Wärmeüberganges hängt dabei natürlich weitgehend von der Strömungsgeschwindigkeit der Luft ab, die durch natürliche Konvektion oder auch zwangsweise umgewälzt werden kann. Gerade aber im ersteren Fall kann die Strömungsgeschwindigkeit sehr gering sein, wodurch innerhalb des Kanals oder des einen Kanalraum bildenden Kanalsystems Temperaturunterschiede, bedingt durch die Natur oder die Form des Heizstranges oder aus anderen Gründen, auftreten können. Hierbei ist auch der Begriff « Heizstrang » in seiner allgemeinsten Bedeutung als Temperierungselement zu verstehen, dessen Erstreckung in einer Richtung wesentlich grösser als in der anderen ist, weshalb auch flächige Temperierungselemente darunter verstanden werden können. Obwohl solche Flächenheizungen weniger dazu neigen, Temperaturunterschiede grösseren Ausmasses aufzubauen, können solche auch bei ihnen auftreten. Temperaturunterschiede sind aber an sich unerwünscht, weil sich dadurch die Wärmeverluste wieder vergrössern können.

Der Erfindung liegt nun die Aufgabe zugrunde, innerhalb der in den bzw. einen Raum mündenden Kanalräume bzw. an deren Oberfläche für einen verbesserten Temperaturausgleich zu sorgen, und dies gelingt erfindungsgemäss dadurch, dass in den Kanalräumen wenigstens eine Schikane vorgesehen ist, die die Luft von ihrer durch die Verbindung der Ansaug- mit der Ausblasöffnung definierten Hauptströmungsrichtung seitlich in der Ebene der Wandung des Raumes ab- bzw. umleitet. Nach oben ablenkende Schikanen sind zwar aus der FR-A-2 373 026 bekannt, doch kann sich dabei kein Temperaturausgleich ergeben, zumal es sich dabei praktisch nur um Kanalkrümmungen in der Vertikalen handelte. Durch die horizontale Umleitung ergibt sich eine Verwirbelung und eine Vermischung mit Luft aus jenen Bereichen, in denen die Wärmeabstrahlung zum Raum hin unterschiedlich ist.

Die erfindungsgemässe Vorrichtung ermöglicht unter anderem die durch die Kanäle zirkulierende Luft gleichzeitig zu filtern und/oder zu entkeimen, sowie gegebenenfalls zu befeuchten, mit Geruchtsvertilgern und/oder Duftstoffen zu beladen, etc... Schliesslich kann auch gleich aus Niedertemperaturheizungen, wie z. B. Sonnenkollektoren gewonnene Warmluft zirkuliert werden, was eine besonders wirtschaftliche Ausnutzung der Energie ermöglicht ; die Luft kann des weiteren entweder mittels natürlicher oder zwangsweiser Ventilation durch die Kanalräume gedrückt oder von der Ausblasseite her durch die Kanalräume gesaugt werden.

Es ist zwar bekannt, langgestreckte, kanalartige Fussbodenräume einer Fussbodenheizung untereinander zu verbinden, doch kann es bei den bekannten Ausführungen mangels einer Konvektionsströmung nur schwer oder gar nicht zu einem Temperaturausgleich zwischen einzelnen Stellen unterschiedlichen Temperaturniveaus der Heizung kommen. Hingegen ergibt sich dieser Effekt bei Anwendung auf eine Temperierungsanlage der eingangs genannten Art, weil dort für eine entsprechende Strömung gesorgt ist. Offenbar ist bisher das der Erfindung zugrunde liegende Problem sowie die Notwendigkeit einer Optimierung in dieser Richtung gar nicht erkannt worden.

Gemäss einer vorteilhaften Ausführungsform der Erfindung bilden die Schikanen wenigstens einen die Kanalabschnitte verbindenden Querkanal. Im Rahmen der Erfindung entsteht nämlich durch einander widersprechende Forderungen insoferne ein Problem, als einerseits der Hohlraum für die Längs- und Querumwälzung möglichst gross und frei von Strömungshindernissen sein soll, anderseits aber aus statischen Gründen eine Abstützung an möglichst vielen Punkten für den Kanalraum erforderlich ist. Dieses Problem wird durch die oben angegebenen Merkmale gelöst. Dabei erhält man die Querkanäle am einfachsten dadurch, daß der in den bzw. einen Raum mündende Kanalraum sowie die Querkanäle an zwei zueinander senkrechten Seiten durch wenigstens eine an sich bekannte, in vorbestimmten Abständen voneinander angeordnete, als Distanzhalter ausgebildete Schikanen, insbesondere von in Draufsicht gerundetem Querschnitt, aufweisende Platte begrenzt ist. Dadurch wird die Bildung der Kanäle und die Verlegung der neuerungsgemäßen Temperierungsanlage erleichtert, wobei besonders bei gerundetem Querschnitt dieser nocken- oder noppenartigen Distanzhalter dieselben gleich als Schablone für allfällige Krümmungen des Heiz- und/oder Kühlstranges dienen können. Dies gilt insbesondere dann, wenn die noppenartigen Distanzhalter in an sich bekannter Weise zur Plattenebene senkrechte, steife Seitenwände besitzen, also beispielsweise mit der Platte aus Beton oder Kunstharz-Hartschaum gefertigt sind. Der gerundete Querschnitt ergibt aber auch einen Herstellungsvorteil, wenn die Distanzhalter in einer Blechplatte durch Tiefziehen erzeugt werden, weil bei gerundetem Querschnitt kaum ein Einreißen scharfer Kanten zu befürchten ist.

Die Verlegung der Anlage wird weiterhin erleichtert, wenn die, insbesondere noppenartigen, Schikanen jeweils in einem derart bemessenen Abstand voneinander angeordnet sind, daß die Fluchtlinien ihrer etwa senkrecht zur Plattenebene verlaufenden Seitenwände voneinander einen wenigstens der Stärke des Heiz- und/oder Kühlstranges entsprechenden Abstand aufweisen. Bei einer bekannten Noppenplatte sind nämlich die Noppen derart auf Lücke in engen Reihen angeordnet, daß der Heizstrang schlangenartig dazwischen gewunden werden muß. Dadurch wird das Einlegen des Heizstranges sehr erschwert. Durch die erfindungsgemässe Ausbildung dagegen wird nicht nur die Arbeit erleichtert, sondern darüber hinaus auch ein genügend großer und vor allem die Konvektion nicht durch unnötigen Strömungswiderstand behindernder Kanal geschaffen, der gemäß einer Weiterbildung vorzugsweise so bemessen ist, daß der Abstand der Fluchtlinien und die Höhe der Schikanen einen Kanalraum bilden, dessen Querschnittsfläche wenigstens doppelt, insbesondere viermal, so groß wie diejenige des Heiz- und/oder Kühlstranges ist. An sich haben sich bei einer vierfach größeren Querschnittsfläche des Luftkanales bei Atmosphärendruck bzw. bezogen auf diesen die besten Ergebnisse gezeit. Dadurch aber, daß durch die erfindungsgemäss vorgesehenen Hohlräume für die Querumwälzung und insbesondere durch die Querkanäle ein guter Temperaturausgleich vorliegt, kann gewünschtenfalls die Querschnittsfläche auch nur doppelt so gross wie die des Heiz- und/oder Kühlstranges bemessen sein, ohne dass der Abfall des Wirkungsgrades gegenüber der erstgenannten Bemassung allzu gross ist. Dies kann sogar ein Vorteil sein, wenn eine enge Verlegung einzelner zueinander paralleler Heizstränge gewünscht ist, weil diese dann noch näher aneinander angeordnet sein können, wodurch die von einem Heizstrang zu erbringende Erwärmung pro laufendem Meter geringer sein mag, was wiederum die Wärmeverluste verringert. Dabei können leicht auch Klemmkörper zum Halten des Heiz- und/oder Kühlstranges vorgesehen sein, wie dies später noch beschrieben wird. Bei enger Verlegung ist es aber vorteilhaft, wenn die Höhe der Schikanen wenigstens doppelt so gross wie die Stärke des Heiz- und/oder Kühlstranges ist, weil dadurch trotz enger Verlegung ein grosser Querschnitt für die Luft gewährleistet ist.

Wie sich gezeigt hat, bilden sich Stellen unterschiedlichen Temperaturniveaus vornehmlich dort, wo dieser Strang eine Krümmung aufweist, weshalb es bevorzugt ist, wenn wenigstens ein Querkanal im Bereiche einer Krümmung des Heiz- und/oder Kühlstranges oder nahe diesem Bereiche vorgesehen ist.

Die Erfindung betrifft aber auch einen Aufbau für eine Temperieranlage, vorzugsweise für eine Strahlungs- und Konvektionsfußbodenheizung, bestehend aus

a) einer mit Vorsprüngen versehenen Platte, vorzugsweise aus isolierendem Material, zwischen welchen Vorsprüngen wenigstens ein von Luft durchströmter Kanalraum gebildet ist, und

b) wenigstens einer in Ausnehmungen der Platte verlaufenden strangförmigen Temperiereinrichtung, insbesondere einem Heizstrang, sowie

c) einem auf den Vorsprüngen ruhenden, gegebenenfalls eine Druckverteilungsschicht umfassenden, Belag.

Wie sich aus den vorigen Erläuterungen ergibt, hatte man ursprünglich die Ausnehmung in der Isolierplatte gerade so groß gewählt, daß der Heizstrang darin Platz fand bzw. schlangenförmig gewunden werden mußte, um eine möglichst große Fläche für das Aufsitzen des Belages zur Verfügung zu haben. Dies bedeutete jedoch, daß nur die freie Oberseite des Heizstranges auf die Unterseite des Belages strahlte, so daß der Heizstrang oft mit beträchtlicher Übertemperatur betrieben werden mußte, was eine Energieverschwendung bedeutet, und sich überdies, wie schon erwähnt, beträchtliche Temperaturunterschiede zwischen dem unmittelbar über dem Heizstrang und dem zwischen zwei Heizsträngen befindlichen Belagstücken des Fußbodens bzw. der jeweiligen Wand ergaben.

Erweitert man aber nun die für die Verlegung des Heizstranges vorgesehene Ausnehmung entsprechend dem in der genannten AT-B enthaltenen Vorschlag zu einem von Luft durchströmten Kanalraum, der mit dem zu beheizenden Raum in Verbindung steht, so läßt sich dadurch zwar die Übertemperatur des Heizstranges durch die vorbeistreichende Luft abbauen, doch muss man in

der Praxis oft komplizierte Haltevorrichtungen für den Heiz- und/oder Kühlstrang im Kanalraum vorsehen.

Um daher eine sichere, bei der Montage einfach zu handhabende und billige Halterung innerhalb von Luft durchströmten und damit gegenüber dem Heizstrang relativ weiten Kanalräumen zu schaffen und gegebenenfalls für eine weitere Temperaturvergleichmässigung über die Wand- bzw. Fussbodenfläche hin Sorge zu tragen, kann der Aufbau so ausgebildet sein, dass wenigstens eine eine strangförmige Temperiereinrichtung aufnehmende Ausnehmung der Platte selbst oder eines Wärmeleitbleches an derselben an zumindest einer Seite eine mit als Klemmkörper ausgebildeten Schikanen versehene Begrenzung aufweist.

Vorzugsweise wird dies so verwirklicht, dass der Aussendurchmesser der strangförmigen Temperiereinrichtung, bzw. eines sie vorzugsweise wenigstens zum Teil umhüllenden, insbesondere zumindest teilweise schwarzen, Wärmeleitbleches, geringfügig grösser als der Abstand zwischen den Fluchtlinien der Begrenzungen der für ihre Verlegung vorgesehenen Ausnehmung ist. Wärmeleitbleche sind für Temperiereinrichtungen ein gelegentlich verwendetes Element, das beispielsweise aus der CH-A-617 999 oder der FR-A-2 201 447 bekannt geworden ist. Dort ist aber eine derartige Bemassung nicht gegeben, vielmehr sind dort relativ weite, langgestreckte parallele Kanäle angeordnet, über die praktisch ebenso lange Wärmeleitbleche gelegt sind, wobei auf Grund der weiten Bemassung der die Kanäle bildenden Ausnehmungen diese auch keine Klemmwirkung ausüben können.

Die Verwirklichung der oben angegebenen Fluchtlinienbemassung kann entweder so geschehen, dass die für die Verlegung der strangförmigen Temperiereinrichtung vorgesehene Ausnehmung ein, vorzugsweise von oben gesehen, wellen- oder zickzackförmig verlaufender Kanalraum ist, wobei die Wellenberge die Klemmkörper bilden, und/oder daß zur Bildung der Klemmkörper auf der Platte noppenartige Vorsprünge — vorzugsweise gegeneinander versetzt — angeordnet sind, und daß diese noppenartigen Vorsprünge zweckmäßig aus wärmespeicherndem Material bestehen, in welch letzterem Falle sich ein besonders guter Temperaturausgleich ergibt. Es kann aber auch für die Verlegung der strangförmigen Temperiereinrichtung eine in einem Winkel zu dem von Luft durchströmten Kanalraum an der Oberseite der Vorsprünge angeordnete, mit seitlichen Klemmkörpern versehene bzw. von ihnen begrenzte Ausnehmung vorgesehen sein, wobei zweckmäßigerweise der Kanalraum an derjenigen Stelle, an der er vom Heiz- und/oder Kühlstrang überquert wird, in seinem Querschnitt erweitert ist.

Diese Maßnahmen beseitigen mit einem Schlage alle bisherigen Unzukömmlichkeiten:

der Kanalraum kann genügend groß gewählt werden, um die beim Erwärmen sich ausdehnenden Luftmengen aufzunehmen, ohne daß es zu einer verringerten Tragfähigkeit der Vorsprünge für den Belag kommt, weil ja die Klemmkörper den Heizstrang halten ;

der Heiz- und/oder Kühlstrang wird beim Verlegen in die dafür vorgesehenen Ausnehmungen eingeklemmt, ohne daß dazu komplizierte Haltevorrichtungen erforderlich sind ;

der allenfalls wellenförmig verlaufende Kanalraum und/oder sein erweiterter Querschnitt, sowie das vorzugsweise verwendete Wärmeleitblech verteilen die Temperatur auch auf zwischen zwei Heiz- und/oder Kühlsträngen befindliche Belagstücke noch besser als herkömmliche Aufbauten ;

an derjenigen Stelle, an der der Heiz- und/oder Kühlstrang den Kanalraum überquert, wird mit Vorteil ein Wärmeleitblech angeordnet, das gleichzeitig zwei Funktionen erfüllt : es verbessert die Tragfähigkeit für das über dem erweiterten Kanalraum befindliche Belagstück, und es bringt die Wärme von den in Ausnehmungen der Vorsprünge verlaufenden Heizstrangstücken in den Kanalraum, wo sie von der vorbeistreichenden Luft abgeführt bzw. verteilt werden kann.

Die Erweiterung des Kanalraumes an derjenigen Stelle, an der er vom Heiz- und/oder Kühlstrang überquert wird, ist deshalb zweckmäßig, weil dort durch den Strang der Querschnitt für die vorbeistreichende Luft an sich verkleinert wäre. Im übrigen bietet diese Variante aber auch noch den Vorteil, daß der Kanalraumquerschnitt, der bei einem innerhalb des Kanalraumes verlegten Strang, wie erwähnt, etwa das Vierfache des Querschnittes desselben haben soll, weiter verringert und beispielsweise auf den dreifachen Querschnitt reduziert werden kann. Nur an den Überquerungsstellen soll er erweitert werden, so daß die Tragfähigkeit der verbleibenden Vorsprünge verbessert wird.

Der Heiz- und/oder Kühlstrang kann — mit oder ohne Wärmeleitblech — am Grunde des von Luft durchströmten Kanalraumes, oder — in jedem Falle von einem Wärmeleitblech gehalten — an der Oberseite des Kanalraumes verlegt werden, in welchem Falle der Kanalraum selbst die Klemmkörper aufweist bzw. von ihnen wenigstens zum Teil begrenzt wird. Der Strang kann aber auch in einem Winkel zum Kanalraum verlaufen, in welchem Falle er den Kanal vorzugsweise in dessen oberer Hälfte überquert und in den Ausnehmungen der Vorsprünge gehalten ist, insbesondere mit Hilfe eines Wärmeleitbleches, das die Wärme auf die Oberfläche der Vorsprünge leitet.

Einzelheiten der Erfindung ergeben sich aus der nachfolgenden Beschreibung von in der Zeichnung schematisch dargestellten Ausführungsbeispielen. Es zeigen :

Figur 1 einen erfindungsgemässen Aufbau samt Heizsträngen und Wärmeleitblechen in perspektivischer Ansicht ;

die Figuren 2A und 2B spezielle Formen von Luftkanälen ;

die Figuren 3A und 3B Beispiele von Querschnitten durch die Auflageflächen ;

die Figuren 4 bis 7 verschiedene Ausführungsbeispiele von noppenförmigen Auflageflächen mit als Klemmkörper wirkenden Vorsprüngen ;

Figur 8 eine Perspektivansicht eines zwischen zwei Noppen eingeklemmten Heizstranges ;

die Figuren 9 und 10 besondere Arten der Heizstrangverlegung ;

Figur 11 eine teilweise Draufsicht auf eine andere erfindungsgemässe Temperierungsanlage nach Wegnahme der darüberliegenden Wand ;

Figur 12 eine Ansicht etwa im Sinne des Pfeiles XII der Fig. 11, wobei zwei Ausführungen von Randplatten und die Anbringung zweier Heiz- und/oder Kühlstränge in einem einzigen Kanal einer Noppenplatte. gezeigt sind ;

Figur 13 eine Ansicht im Sinne des Pfeiles XIII der Fig. 12 einer Ausführungsform der erfindungsgemäß bevorzugt verwendeten Randplatte ; und

Figur 14 eine weitere Ausführung einer erfindungsgemässen Temperierungsanlage im Querschnitt,
wobei jeweils Teile mit gleicher Funktion mit denselben Bezugszeichen, gegebenenfalls durch Zusatzzeichen ergänzt, versehen sind.

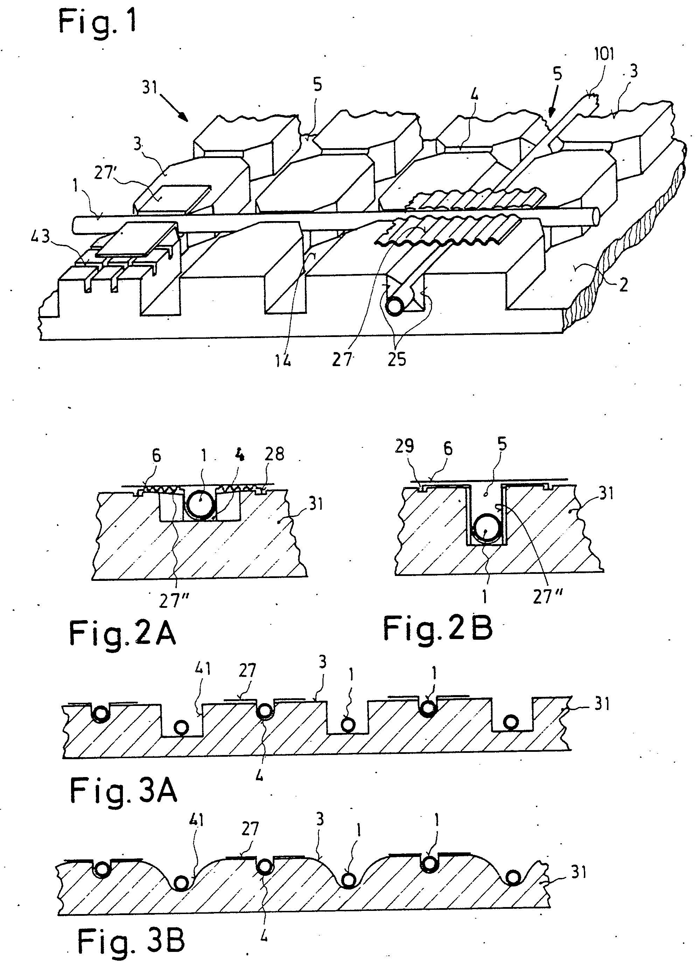

Fig. 1 zeigt einen erfindungsgemässen Aufbau 31 für eine Strahlungs- und Konvektionsheizung, dessen Auflageflächen 3 für einen nicht dargestellten Fußbodenbelag oder Estrich vorzugsweise noppenförmig, gegebenenfalls aus wärmespeicherndem Material, ausgebildet sind, und die durch Luftkanäle 5 und durch Auflagekehlungen 4 für Heizstränge 1 unterbrochen sind.

Die Auflagekehlungen 4 enden etwa auf halber Höhe der Noppen 3, so daß sie dieselben in zwei Halbnoppen aufteilen. Die halbe Höhe vom Grunde der Kehlungen 4 abwärts entspricht vorzugsweise dem Durchmesser des quer dazu im Luftkanal 5 liegenden Heizstranges 101, so daß dieser vom darüberliegenden Heizstrang 1 ebenfalls geklemmt wird, obwohl auch die Noppen 3 mit als Klemmkörper wirkenden seitlichen Vorsprüngen 25 versehen sein können. Alternativ ist der Strang 1 als einziger Klemmkörper für den darunterliegenden Heizstrang 101 vorgesehen.

Auf diese Weise kann bei Herstellung des Aufbaues 31 aus vorgefertigten Platten 2 so vorgegangen werden, daß man erst diese Platten 2 verlegt, dann den unteren Heizkörper 101 mittels der Klemmkörper 25 befestigt und darüber zur Verteilung der Wärme ein Wärmeleitblech 27 oder 27′ in die Auflagekehlung klemmt. Bei Verwendung eines verhältnismäßig kurzen Wärmeleitbleches 27′ sind in Abständen je ein solches Blech zwischen zwei Noppenvorsprünge 3 zu klemmen. Ist die Kehlung 4 an sich zu breit, um unmittelbar selbst eine Klemmwirkung auszuüben, so kann das Wärmeleitblech 27 im Bereiche seiner den Heizstrang 1 aufnehmenden Vertiefung in Längsrichtung entweder in der dargestellten Weise gewellt oder mit Klemmkörper gegen die Kehlung 4 einerseits und den Heizstrang 1 andereseits bildenden Vorsprüngen, Fortsätzen

od. dgl. versehen sein. Dadurch wird gleichzeitig die Wärmeabgabe durch die vergrößerte Oberfläche verbessert. Dies kann besonders dann wirksam erfolgen, wenn etwa der Heizstrang 101 weggelassen wird und der Kanal 5 so zur Aufnahme von vom Wärmeleitblech 27′ nach unten ragenden Längsrippen frei ist, die sich gegebenenfalls am Grunde des Kanales 5 abstützen und so zur Tragfähigkeit beitragen. Der Kanal 5 kann dann aber auch zur Unterbringung einer Luftbefeuchtungseinrichtung genutzt werden.

Nun hat der Aufbau 31 — im Gegensatz zu bisher bekannten Ausführungen — einen festen Halt, und es braucht nur noch der Heizstrang 1 in das Wärmeleitblech 27 bzw. 27′ eingelegt werden, das zur besseren Aufnahme der vom Heizstrang 1 abgegebenen Wärmestrahlung an wenigstens einer (jeweils einem der Heizstränge 1 bzw. 101 zugewendeten) Fläche schwarz sein kann. Verzichtet man auf die Anordnung der Klemmkörper 25 (die gegebenenfalls gar nicht einstückig mit den noppenartigen Vorsprüngen 3 ausgebildet zu sein brauchen, sondern gewünschtenfalls mit dem Heizstrang eingelegt werden, für welchen Fall die vertikalen Seitenwände der Vorsprünge 3 leicht V-förmig schräg nach unten laufen, so daß einerseits die Klemmung gesichert und andererseits die Entformung erleichtert ist), so kann der den Heizstrang 1 aufnehmende Kanal 5, aber auch die Kehlung 4 reflektierend ausgekleidet oder angestrichen sein.

An den Kreuzungszonen 14 der in zwei Ebenen angeordneten Heizstränge ist der Querschnitt der Luftkanäle 5 zweckmäßig vergrößert, um einen etwaigen Wärmestau an diesen Punkten zu vermeiden, der sich durch die Verminderung des Kanalquerschnittes durch den quer durchlaufenden Heizstrang ergeben könnte. Diese Vergrösserung kann sowohl — wie in Fig. 1 dargestellt — eine Verbreiterung sein, alternativ zusätzlich kann der Kanalraum 5 in der Kreuzungszone 14 aber auch vertieft sein (nicht dargestellt). Vorzugsweise werden die Kreuzungsbereiche 14 durch Wärmeleitbleche 27 überdeckt, um eine stabile Auflage für den nicht dargestellten Fussbodenbelag zu gewährleisten. Gerade deshalb müssen die Wärmeleitbleche 27 gut aufliegen und dürfen nicht rutschen.

Die Oberfläche der Noppen 3 kann Rillen 43 aufweisen, die eine erhöhte Menge an erwärmter Luft an einen jeweils darüber befindlichen Bodenbelag bzw. an das Wärmeleitblech 27′ herankommen läßt und dadurch den Wirkungsgrad der Heizung noch weiter verbessert. Diese Rillen 43, obwohl nur in Fig. 1 dargestellt, sind natürlich auch bei allen anderen Ausführungen der Noppen 3 anbringbar.

Die Fig. 2A, 2B zeigen je einen Aufbau 31 mit einem breiten, flachen bzw. mit einem schmalen, tiefen Querschnitt der Luftkanäle 5, in welche die Heizstränge 1, bzw. 101 eingebettet sind und die vorzugsweise in einem Winkel von 90° von einem nicht dargestellten weiteren Heizstrang in einer tieferen (Fig. 2A) oder einer höheren (Fig. 2B) Ebene gekreuzt werden, ähnlich wie dies in Fig. 1 an Hand der Heizstränge 1 und 101 dargestellt ist, und die dann ihrerseits in den hiefür vorgesehenen Ausnehmungen des jeweiligen, Klemmkörper bildenden Noppenprofiles eingeklemmt sind. Auch können bei der Ausbildung nach Fig. 2B zwei Heizstränge übereinander verlegt werden, so daß beispielsweise Vor- und Rücklauf eines Wärmetransportmediums übereinander verlegt sind. Dabei bleibt zwischen, bzw. neben den Strängen noch Raum für die Luftkonvektion.

Die Wärmeleitbleche 27" weisen hier an ihren seitlichen Kanten Umbördelungen 28 auf, mit welchen sie in Schlitzen 29 des Aufbaues 31 verankert sind. Diese Schlitze können von den Rillen 13 gebildet sein bzw. ihnen entsprechen. Bei der Ausführung nach Fig. 2A ist das Wärmeleitblech 27" zumindest an seinen Seitenflügeln gewellt, um die Wärmeabgabe zu verbessern, doch kann eine Wellung (gegebenenfalls in Längs- statt in Querrichtung) in dem den Heizstrang umgebenden, in die Kehlung 4 eingesetzten Bereich zur Klemmung in der letzteren beitragen. Alternativ oder zusätzlich können z. B. auch vom Wärmeleitblech in den Kanal ragende kleine Rippen zur Verbesserung der Wärmeabgabe vorgesehen sein. Ein eine Abdeckung bildendes weiteres Wärmeleitblech 6 kann als Basis für einen Estrich bzw. einen Fussbodenbelag dienen. Durch den guten Zusammenhalt des Unterbaues infolge der Klemmwirkung ist auch für dieses Blech 6 ein solider und tragfähiger Boden geschaffen. Dabei ist gegebenenfalls die Umbördelung 28 bei entsprechend eingeklemmtem Wärmeleitblech 27" entbehrlich. Alternativ können die bestehenden Flügeln des Wärmeleitbleches auch nicht aus dem Kanal herausragen, sondern sich an den beiden vertikalen Kanalwänden festkrallen und derart als Klemmkörper dienen.

Beim Aufbau 31 nach den Fig. 3A und 3B sind die Wärmeleitbleche 27 mit den in der oberen Ebene geführten Heizsträngen 1 in die Auflagekehlungen 4 eingeklemmt, wobei das Profil 41 des Aufbaues 31 in Fig. 3A einen rechteckigen, gewünschtenfalls leicht trapezförmig nach oben sich verjüngenden, in Fig. 3B hingegen einen gewölbten Querschnitt aufweist, was in den zuletzt genannten beiden Fällen jedenfalls die Entformung bei der Herstellung erleichtern kann.

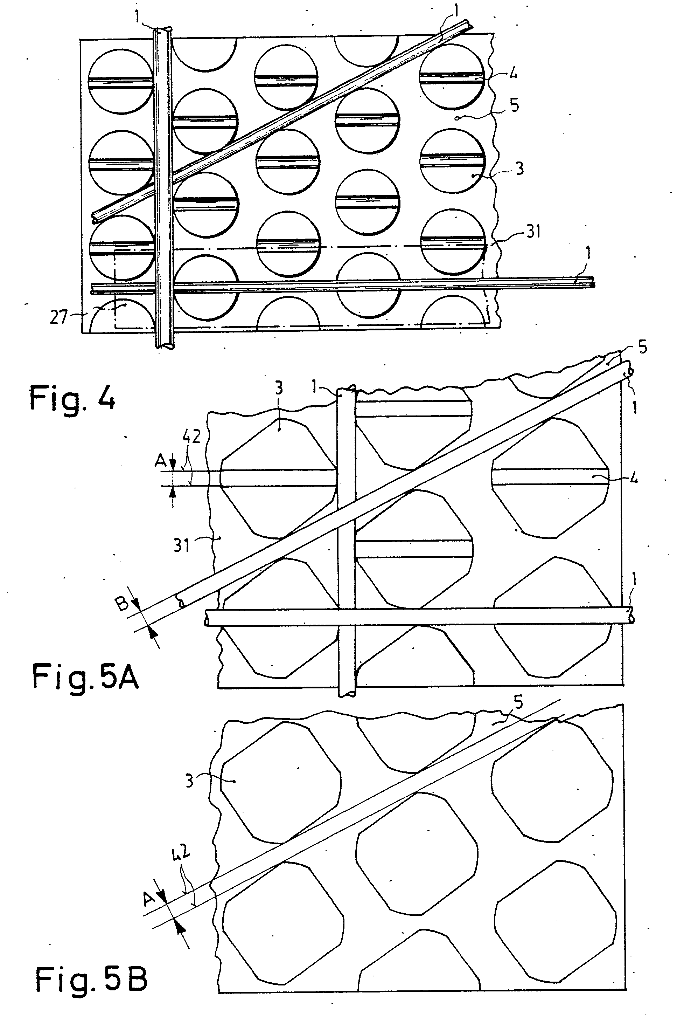

Im Aufbau 31 gemäß Fig. 4 sind kreisförmige Noppen 3 (in Draufsicht gesehen) vorhanden, die derart angeordnet sind, daß die Heizstränge 1 sowohl in zwei Ebenen geführt, als auch zwischen den Noppen 3 bzw. in deren Auskehlungen 4 geklemmt werden, wobei die dem Heizstrang 1 zugekehrten Noppenbäuche die Klemmkörper bilden. Als Luftkanal 5 wirken die Zwischenräume zwischen den Noppen 3.

Die Fig. 5A, 5B zeigen zwei Varianten in der Ausführung der Noppen 3, welche in Fig. 5A mit einer Auflagekehlung 4 zur Aufnahme eines zusätzlichen Heizstranges 5 in einer zweiten Ebene versehen sind, wogegen die Noppen 3 der Fig. 5B bloß das Einklemmen von Heizsträngen 1 in einer einzigen Ebene gestatten. Der Abstand A zwischen den beiden Fluchtlinien 42 ist dabei etwas kleiner als der Durchmesser B der Heizstränge 1, wobei die Ecken der dargestellten Noppen 3 als Klemmkörper wirken. Auch hier können gewünschtenfalls Wärmeleitbleche verwendet werden.

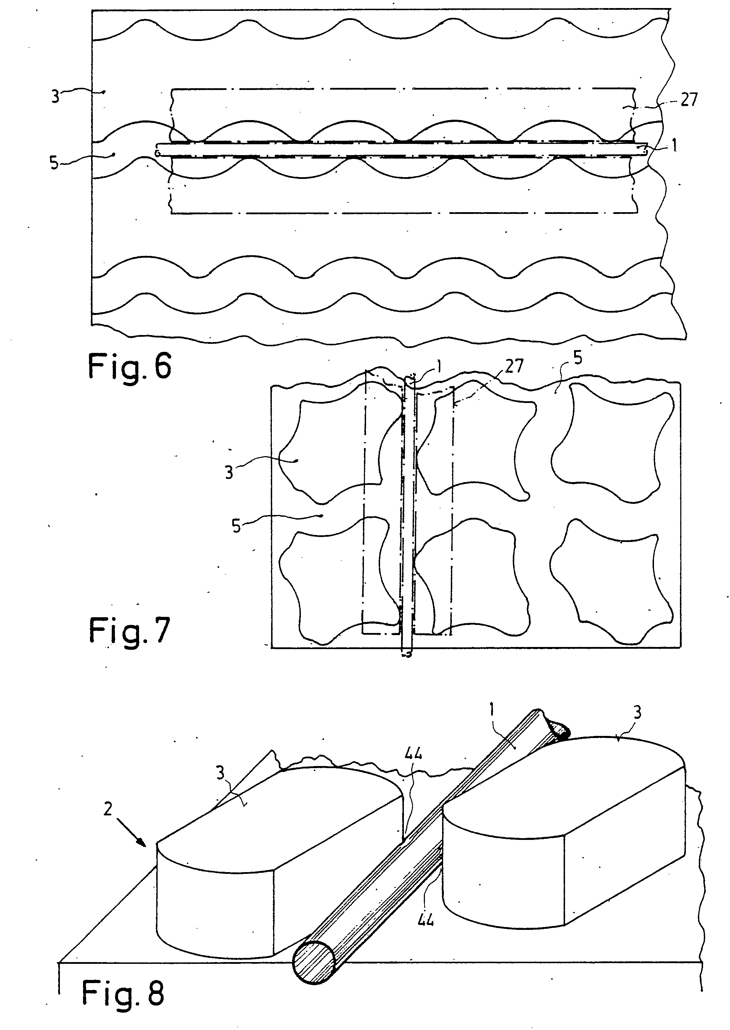

Fig. 6 zeigt eine weitere Ausführungsart, bei der die Luftkanäle 5 schlangenförmig gewunden und so die Auflageflächen als bogenförmige bzw. gewellte Noppenbänder 3 ausgebildet sind. Auch hier sind Ausführungen mit und ohne Verwendung von Wärmeleitblechen möglich, wie strich-punktiert angedeutet ist.

Eine Weiterentwicklung davon ist in Fig. 7 zu sehen, deren Noppen 3 scheinbar unregelmäßig sind, jedoch durch Überschneidung je zweier Wellenlinienkanäle 5 zustandekommen, so daß sich tatsächlich jede vierte Noppe gleicht. Für das Wärmeleitblech 27 bzw. die darüberliegende Bodenkonstruktion ergibt sich eine verbesserte Auflage und eine größere Trag- und Trittfestigkeit, weil Einknickungen entlang des Kanalverlaufes auch bei starker Last weniger leicht möglich sind.

Die Platte 2 in Fig. 8 zeigt zwei noppenartige Vorsprünge 3, zwischen denen der Heizstrang 1 wiederum an den Ecken 44 eingeklemmt ist, weil sein Außendurchmesser geringfügig größer ist als der Abstand der Fluchtlinien dieser beiden Vorsprünge 3 mit den übrigen (nicht gezeigten) die linke und rechte Begrenzung des den Heizstrang 1 aufnehmenden Kanales bildenden Vorsprüngen.

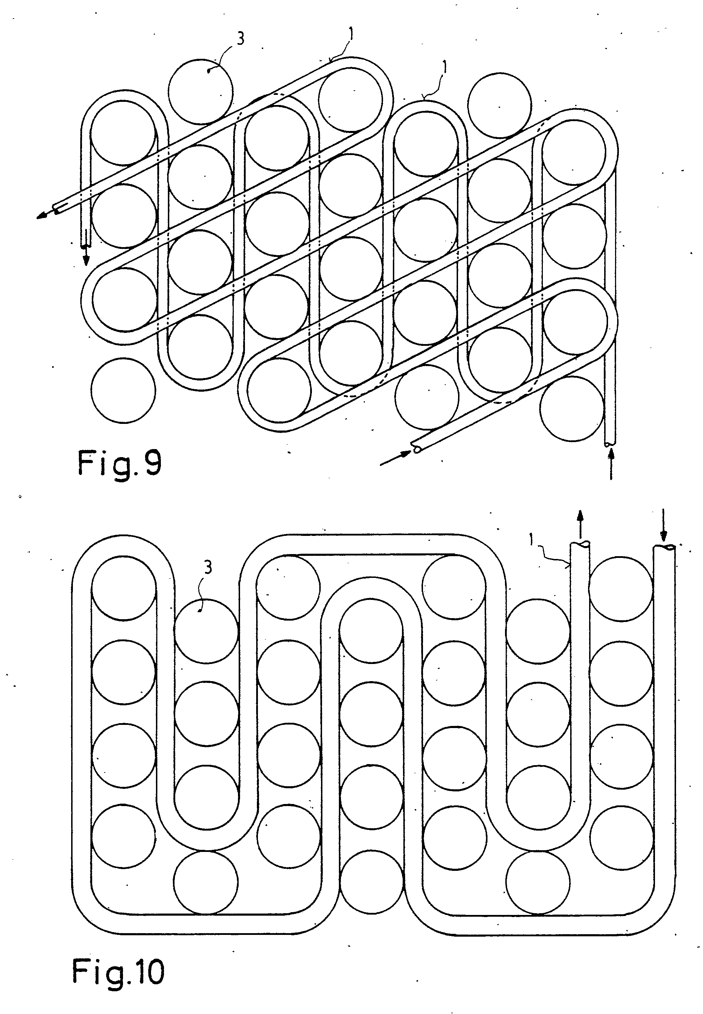

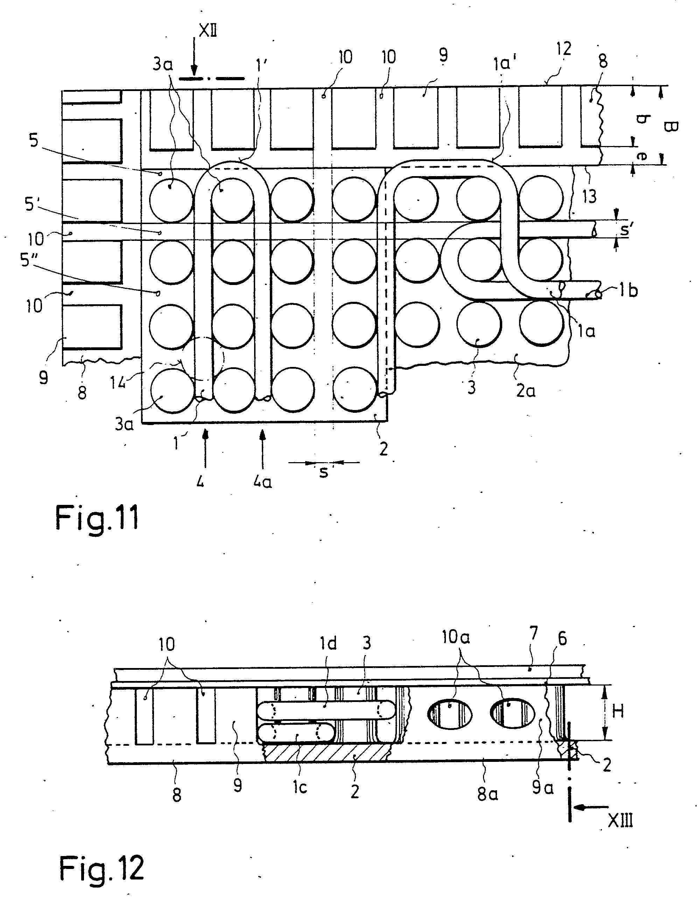

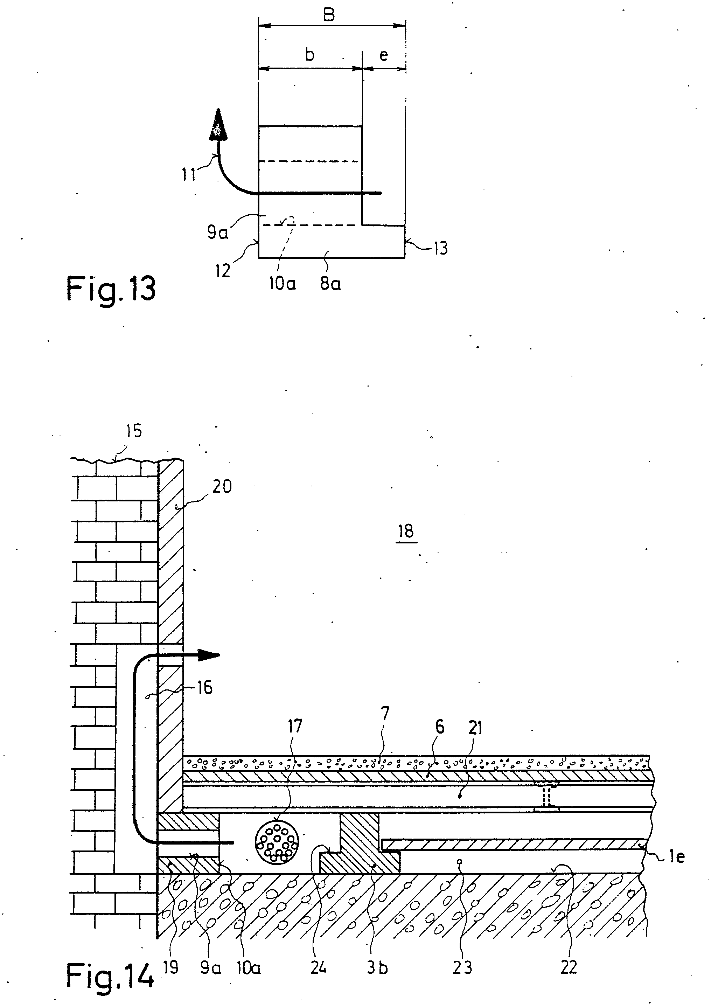

Die Fig. 9 und 10 veranschaulichen (ebenso wie Fig. 11) alternative Formen der Verlegung von Heizsträngen 1, wobei besonders die gleichmäßige und dichte Verteilung der Heizstränge 1 in Fig. 10 eine entsprechend gleichmäßige Wärmeverteilung an der Oberfläche der Fußbodens bzw. der jeweiligen Wand sichert. Dabei sei erwähnt, daß es an den Enden der Kanäle 5 gegen den beheizten Raum hin gegebenenfalls günstig ist, Staubfilter vorzusehen, wie dies später noch an Hand der Fig. 14 beschrieben wird. Je nach Wärmebedarf können in Zonen des höheren Wärmebedarfes alle durch die Noppen 3 auf vorgefertigten Platten 2 gegebenen Kanäle belegt oder sogar doppelt belegt sein, wogegen in Zonen geringen Wärmebedarfes einzelne Kanäle nur einfach oder überhaupt nicht bzw. nur jeder zweite und dritte od. dgl. belegt ist (vgl. Fig. 9, 11). Es ist auch möglich, mäanderförmig, schneckenförmig waagrecht und senkrecht usw. zu verlegen, wie dies aus den Fig. 9 bis 11 leicht verständlich ist. Dabei können die Längs- und Querkanäle 5 unterschiedlich groß und ausgeformt sein bzw. kann der Querschnitt des Kanales jeweils verschieden sein, wie besonders aus Fig. 1 und den Klemmkörpern 25 deutlich wird. Ferner ergeben sich für die Befestigung der Heizstränge 1 drei verschiedene Möglichkeiten:

Entweder der Heizstrang 1 wird unmittelbar in die Kehlung 4 oder den Kanal 5 ohne Zwischenlage eines Wärmeleitbleches geklemmt,

oder unter Zwischenlage eines Wärmeleitbleches, das (wie das Wärmeleitblech 27' in Fig.

1) seinerseits entweder jeweils zwischen zwei Noppen eingeklemmt ist, so daß mit wenigen vorgefertigten Blechstücken kurzer Länge das Auslangen gefunden wird, oder

das Wärmeleitblech überbrückt auch die Querkanäle 5 (vgl. das Wärmeleitblech 27 in den Fig. 1, 4 und 7), wodurch einerseits eine erhöhte Stabilität des Unterbaues erzielt wird, anderseits zur Anpassung an die jeweiligen Raumdimensionen große Stücke abgelängt werden müssen, was einen zusätzlichen Arbeits- und Materialaufwand bedeutet.

Gemäß Fig. 11 werden vor dem Verlegen von Heiz- und/oder Kühlsträngen 1, 1a, 1b, vorzugsweise quadratische, Noppenplatten 2, 2a auf den Fußboden oder die jeweilige Wand bzw. die Decke des Raumes aufgelegt und gegebenenfalls in an sich bekannter Weise befestigt (z. B. an Lattenrosten od. dgl.). Bevorzugt kommt jedoch die gegenständliche Neuerung bei Fußbodenheizungen in Anwendung. Selbstverständlich könnte auch eine einzige, die Wandfläche des Raumes bedeckende Platte vorgesehen sein, obwohl dies meist unhandlich ist. Die Noppenplatten 2, 2a weisen jeweils in Draufsicht kreisrunde Noppen 3 auf, die in gleichmäßigen Abständen voneinander angeordnet sind. Obwohl Noppen mit in Draufsicht gerundetem Querschnitt, also mit Kreisquerschnitt, ovalem Querschnitt oder dem eines Viereckes mit gerundeten Ecken, wegen der Möglichkeit, sie bei Krümmungen des Heizstranges als Schablone zu verwenden, bevorzugt sind, ist dies keineswegs zwingend erforderlich, und die Noppen können ebenso etwa einen quadratischen oder vieleckigen Querschnitt mit scharfen Kanten besitzen, wie auch aus der Beschreibung der vorigen Figuren ersichtlich ist. Gerade aber bei gerundetem Querschnitt wirken diese Noppen 3 nicht nur als Schablone für die Krümmungen 1', 1a', der Heiz- und/oder Kühlstränge, sondern es ist auch die Gefahr des Ausbrechens von Kanten verringert und besonders bei konischer Ausbildung der Noppen das Entformen erleichtert.

Werden keine vorgefertigten Noppenplatten 2, 2a verwendet, so brauchen beispielsweise in Platten aus Polystyrol-Hart-schaum nur die Kanäle 4, 4a usw. entsprechend dem gewünschten Verlauf der Heizstränge 1, 1a und 1b eingeschnitten werden. Erfindungsgemäß ist aber vorgesehen und vorteilhaft, daß außer den Kanälen 1, 1a, 1b verbreiterte Hohlräume 14 (vgl. auch Fig. 1) ergebende und die einzelnen Kanalabschnitte 4 bzw. 4a untereinander verbindende Querkanäle, z. B. 5, 5' und 5", vorgesehen sind. Für die durchströmende Luft ergeben sich so Schikanen, die für eine gleichmäßigere Verteilung der Wärme sorgen. Dabei ist der Querkanal 5 im Bereiche der Krümmungen 1' und 1a' von besonderer Bedeutung, weil sich im Bereiche der Krümmungen erfahrungsgemäß am ehesten ein unterschiedliches Temperaturniveau gegenüber anderen Bereichen der Anlage ausbildet. Allerdings könnte statt des Querkanales 5 gegebenenfalls der den Krümmungen 1', 1a' ebenfalls sehr nahe Querkanal 5' alleine vorgesehen sein.

Diese Querkanäle 5, 5' bzw. allenfalls auch 5" sind also bei Nichtverwendung von Noppenplatten 2 bzw. 2a ebenfalls in die Unterwand bzw. den Unterboden, z. B. in eine Polystyrol- oder Polyurethan-Platte, einzuschneiden und sorgen für eine Querströmung bei gleichzeitiger Abstützung der darüberliegenden Wand durch die dazwischen verbliebenen Noppen 3, welche Querströmung eine bessere Temperaturverteilung bzw. Wärmeausnützung ergibt. Einfacher für die Verlegung ist allerdings die Verwendung der Noppenplatten 2, 2a usw. Bei der Ausführung nach Fig. 11 wäre nun eine Versetzung der Noppen 3 gegeneinander entsprechend den Fig. 9 und 10 der Ausbildung einer breiten Strömung eher hinderlich, zumal die Noppenhöhe nicht in jedem Falle beliebig wählbar ist, weshalb vorzugsweise die Noppenreihen in der in Fig. 11 dargestellten Weise ausgebildet sind.

Der Heiz- und/oder Kühlstrang 1 ist so gelegt, daß zwei zueinander parallele Kanalabschnitte 4, 4a vorhanden sind. Im Prinzip ist aber — wie an Hand des Heiz- und/oder Kühlstranges 1a gezeigt ist — jede Verlegungsart möglich (vgl. die Fig. 9 und 10), etwa auch eine solche, bei der die Kanalabschnitte zueinander in einem Winkel entsprechend Fig. 9 stehen. Wesentlich für diese Ausführung ist dabei nur, daß der Kanalraum dadurch erweitert ist, daß zwischen diesen Kanalabschnitten 4, 4a entsprechende Querkanäle 5, 5', 5" gelegt sind, die durch eine entsprechende Querumwälzung zusätzlich zur Längsumwälzung in den Kanälen 4, 4a für einen Temperaturausgleich sorgen.

Bei der dargestellten, bevorzugten Ausführung sind die Noppen 3 so angeordnet, dass der Abstand s zwischen den Fluchtlinien ihrer Seitenwände nicht ganz der Stärke des Heizstranges 1, 1a bzw. 1b entspricht, doch kann der Abstand s auch nicht ganz doppelt so gross wie die Stärke des Heiz- und/oder Kühlstranges sein, so dass gegebenenfalls zwei solcher Stränge nebeneinander verlegt werden können. Auch diese Stränge können aber, wenn der Abstand s etwas mehr als doppelt so gross wie die Stärke des Heiz- und/oder Kühlstranges ist, entsprechend den vorher beschriebenen Ausführungen durch seitliche Klemmkörper 25 bzw. durch quer darüber gelegte Heiz- und/oder Kühlstränge oder versetzte Noppen 3 geklemmt und festgehalten werden. Dort aber, wo eine weniger enge Anordnung der Heiz- und/oder Kühlstränge erforderlich ist, spielt es keine Rolle, wenn — wie vorher erwähnt — die zwischen den Noppenreihen ausgebildeten Kanäle frei bleiben, vielmehr dienen diese Hohlräume der Querumwälzung und können gegebenenfalls auch von Noppen frei sein.

Besonders vorteilhaft ist es auch, wenn die Verlegung zweier Heiz- und/oder Kühlstränge in einem Kanal dadurch erfolgen kann, daß die Noppenhöhe entsprechend groß gewählt ist (vgl. die Höhe H in Fig. 12), wie an Han der Stränge 1c, 1d ersichtlich ist. Auf diese Weise können bei gleich großem Kanalquerschnitt die Seitenwände der Noppen zum Klemmen des Heizstranges enger angeordnet sein. Der Abstand s mal der Höhe H ergeben dabei eine Querschnittsfläche für den Kanalabschnitt, die abzüglich der Querschnittsfläche eines Stranges wenigstens doppelt so groß wie die letztere sein soll, um eine gute Luftzirkulation und einem störungsfreien Wärmetransport zu sichern. Es hat sich gezeigt, daß bei Atmosphärendruck optimale Werte dann erhalten werden, wenn der freie Kanalquerschnitt etwa das Vierfache des Querschnittes des Heizund/oder Kühlstranges beträgt, doch kann der freie Kanalquerschnitt bei Zwangsumwälzung mittels Umwälzpumpe ohne Wirkungsgradverlust entsprechend verringert werden.

Da einerseits auch die als Querkanäle 5', 5″ angelegten Noppenreihenabstände unter Umständen für die Strangverlegung benutzt werden (vgl. den Heiz- und/oder Kühlstrang 1b) und anderseits entsprechend breite Querkanäle zu einer besseren Temperaturverteilung führen, weisen die Querkanäle 5, 5' vorzugsweise eine gleich große Breite s' wie die Kanalabschnitte 4 bzw. 4a auf, d. h. die Abstände s und s' sind gleich groß. Dies ist aber keineswegs zwingend erforderlich, vielmehr können diese beiden Abstände s bzw. s' auch unterschiedlich groß sein, wobei der Abstand s' im allgemeinen kleiner gewählt ist. Die Anordnung kann aber auch so getroffen sein, daß der Abstand s' nur etwa in jeder zweiten Noppenreihe gleich dem Abstand s ist und dazwischen kleiner ausgebildet ist. Somit kann wenigstens ein Teil der Querkanäle 5' bzw. 5″ einen gleich großen Querschnitt wie die Kanalabschnitte 4 bzw. 4a besitzen.

Eine weitere Maßnahme zur besseren Verteilung der Temperatur ist darin gelegen, daß die Noppenplatte 2 gemäß Fig. 12 durch die an Hand der Fig. 2A, 2B bereits beschriebene Platte 6 aus wärmeleitendem Material, beispielsweise aus Aluminium, abgedeckt ist, aus welchem Material zweckmäßig auch die Wärmeleitbleche 27 und 27' bestehen. Oberhalb dieser Aluminiumplatte 6 kann ein Estrich 7 oder ein Fertigteilboden, im Falle der Anordnung als bloße Kühlanlage (bevorzugt in der Decke des Raumes) auch nur ein Verputz vorgesehen sein. Alternativ kann die Abdeckung 6 aus wärmespeicherndem Material bestehen, wodurch sich über die Betriebsdauer ein Temperaturausgleich ergibt, doch ist eine Abdeckung aus wärmeleitendem Material bevorzugt.

An sich ist es bei Verwendung der Noppenplatten 2 bzw. 2a durchaus möglich, dieselben bis zur Wand des Raumes hin zu verlegen. Die dann am Ende der Kanalabschnitte 4 bzw. 4a usw. austretende Strömung wäre aber durch die am Rande stehenden Noppen 3a nur schlecht geführt, und es könnte zu einer unerwünschten und den Wärmetransport behindernden Wirbelbildung kommen. Hinzu tritt, daß ja die austretende Luft meist noch ein Stück entlang der vertikalen Wand (vgl. die Wand 15 in Fig. 14) aufwärts geführt werden soll (bei Kühlung an der Decke dementsprechend abwärts) und von den Randnoppen 3a weg nur schlecht dem aufsteigenden Kanal 16 (Fig. 14) zugeführt werden kann.

Deshalb ist es bevorzugt, wenn für die Randzonen entweder die Noppenplatten 2, 2a selbst oder — wie es einer besonders zweckmäßigen Ausführung entspricht — besondere Randplatten 8 bzw. 8a (vgl. Fig. 12, 13) Formkörper 9 bzw. 9a aufweisen, die Kanalabschnitte 10 bzw. 10a mit zueinander bzw. zur Ebene der die Kanäle begrenzenden Noppenplatte 2 bzw. 2a sowie zur Abdeckung 6 ebenso wie zu den Kanalabschnitten 4, 4a, schließlich aber auch zu den Querkanälen 5, 5' und 5″ parallelen Wänden begrenzen. In Fig. 12 sind dabei zwei verschiedene Randplatten 8 bzw. 8a als Beispiel dafür gezeigt, wie die Formkörper 9 bzw. 9a und die zugehörigen Kanalabschnitte 10 bzw. 10a aussehen können. Wesentlich ist dabei auch nicht eine vollkommene, sondern nur eine annähernde Parallelität der Seitenwände dieser Kanalabschnitte 10 bzw. 10a, wie sie aus den Fig. 11 und 13 (dort strichliert) zu ersehen ist. Vorzugsweise fluchten die Kanalabschnitte 10 bzw. 10a der Randplatten 9 bzw. 9a mit den Kanälen der Noppenplatten 2, 2a, um Strömungswiderstände durch Umlenken des Luftstromes zu vermeiden.

Aus dem gleichen Grunde ist es auch zweckmäßig, wenn die Querschnittsfläche dieser Kanalabschnitte 10 bzw. 10a etwa gleich groß wie die Querschnittsfläche der mit ihnen fluchtenden Kanäle 4, 4a bzw. 5, 5', 5″ der Noppenplatten 2, 2a ist. Hiebei ist es allerdings auch möglich, einem Kanal, z. B. dem Kanal 4 oder 4a, der Noppenplatte 2 mehrere dünne Kanalabschnitte der Randplatte zuzuordnen, deren Querschnittsfläche zusammengenommen zweckmäßig wiederum der des zugehörigen Kanals 4 oder 4a der Noppenplatte 2 entspricht. Eine Anzahl solcher dünner Kanalabschnitte 17 ist in Fig. 14 angedeutet. Durch diese Kanalabschnitte 10 bzw. 10a strömt jedenfalls die temperierte Luft gemäß dem Pfeil 11 in Fig. 13 so zur Wand des Raumes und im Falle einer Heizung dieser entlang nach oben, wie dies an Hand der Wand 15 und des vertikalen Kanales 16 in Fig. 14 gezeigt ist.

Es wurde bereits erwähnt, daß die Formkörper 9 bzw. 9a auch am Rande besonderer Noppenplatten ausgebildet sein können. Die Verlegung wird aber vereinfacht, wenn spezielle Randplatten 8 bzw. 8a vorgesehen sind, die eine Breite B aufweisen, die im wesentlichen der Breite b des Formkörpers entspricht, im dargestellten Ausführungsbeispiel zuzüglich eines Abstandes e, durch den der Querkanal gebildet bzw. verbreitert wird. Somit verläuft bei dieser Ausführung der Kanalabschnitt 10 bzw. 10a vom äußeren Rand 12 der Randplatten 8 bzw. 8a über eine Länge b und endet im Abstand e vor dem gegenüberliegenden Rand 13 (vgl. Fig. 13). Es kann jedoch erwünscht sein, daß der Kanalabschnitt 10 bzw. 10a auch in einem geringen Abstand vor dem Rand 12 endet, etwa um einen vorbestimmten Abstand zur Raumwand zu sichern.

Es sei erwähnt, daß die Anordnung der Aluminiumplatte 6 die wärmeführende und über die Quer- und Längskanäle 5, 5', 5" bzw. 4, 4a zu belüftende Fläche vergrößert. Die Noppen 3 zur Abstützung dieser Platte 6 brauchen übrigens nicht sockelförmig sein, wie dargestellt, sondern es sind auch andere Formen dieser Distanzhalter, wie etwa eine Schienenform möglich. Insbesondere bei Ausbildung der Noppenplatten aus Metall (wodurch die Temperaturverteilung wiederum begünstigt wird) können die durch Tiefziehen erzeugten Noppen auch kegelstumpfförmig sein. Es wurde auch bereits erwähnt, daß diese Form bei Herstellung aus anderen Materialien das Entformen erleichtert. Eine weitere Möglichkeit besteht darin, daß auf einer ebenen Platte in den gewünschten Abständen Distanzhalter aufgestellt werden, wie dies später an Hand der Fig. 14 besprochen werden wird. Darüber kann dann die Aluminiumplatte 6 oder eine wärmespeichernde Abdeckung, gegebenenfalls beide, insbesondere übereinander, angeordnet sein.

Es kann ferner erwünscht sein, die Kanalabschnitte 10 bzw. 10a schräg zur Längsachse der Kanäle 4 bzw. 4a, beispielsweise mehrere solcher Abschnitte fächerförmig, vorzugsweise aber auf- bzw. (bei Kühlung) abwärts verlaufend anzuordnen. Obwohl es bevorzugt ist, müssen solche Kanalabschnitte 10 nicht unbedingt, wie in Fig. 11 gezeigt, auch den Querkanälen 5, 5', 5" zugeordnet sein.

In Fig. 14 ist wiederum eine bevorzugte Anwendung der Erfindung nämlich auf die Beheizung eines Raumes 18 veranschaulicht. Hiezu wurde beim Ausbau des Raumes 18 in der vertikalen Wand 15 ein Kanal 16 frei gelassen und zumindest an zwei Rändern des Raumes Distanzhalter 19 aufgestellt, die beispielsweise von entsprechenden Randplatten ähnlich den Platten 8 oder 8a gebildet sein können. In diesem Falle erübrigt sich aber aus den im folgenden besprochenen Gründen ein Randabstand e (vgl. Fig. 13), so daß die Formkörper 9a mit ihren Kanalabschnitten 10a die ganze Breite der Randplatte 19 einnehmen. Innerhalb des Kanales 16 können dann gewünschtenfalls die schon erwähnten Staubfilter untergebracht sein.

Auf den Randplatten 19 kann entweder, wie dargestellt, gleich eine, z. B. vorgefertigte, Verputzplatte 20 aufgestellt werden, oder die Bodendeckenkonstruktion mit Doppel-T-Trägern 21, einer Abdeckplatte 6 und dem Estrich 7 rückt (bezogen auf Fig. 14) nach links und begrenzt teilweise den vertikalen Kanal 16, wogegen die Verputzplatte 20 auf ihr zu stehen kommt. Die Doppel-T-Träger 21 sind deshalb nötig, weil bei dieser Konstruktion zwischen Unterboden 22 und Bodendeckenkonstruktion 6, 7 und 21 ein einziger großer Hohlraum 23 vorgesehen ist, der eine Luftumwälzung nicht nur in Hauptströmungsrichtung von einer Seite zu den Kanalabschnitten 10a der anderen Seite, sondern auch in Querrichtung gestattet, so daß sich innerhalb des Hohlraumes 23 leicht ein Temperaturausgleich ergibt. Zur Erleichterung dieser Querumwälzung können dem Vertikalkanal 16 ähnliche Kanäle auch in den anderen Wänden vorgesehen sein, und es sind beispielsweise dünne Kanalabschnitte 17 zur Verbindung des Hohlraumes 23 mit derartigen seitlichen Vertikalkanälen aus Fig. 14 ersichtlich, die beispielsweise auch zum Nachbarraum führen können.

Da der Hohlraum 23 genügend Platz bietet, kann statt eines länglichen Heizstranges auch eine Flächenheizung mit einer nur schematisch angedeuteten Heizplatte oder -matte 1e vorgesehen sein, wodurch sich ebenfalls eine gleichmäßigere und verlustärmere Beheizung ergibt. Selbstverständlich können aber auch in einem Hohlraum 23 radiatorartige Heizelemente angeordnet sein, durch deren Kanalsystem wahlweise statt des Heizmediums ein Kühlmedium geführt werden kann, wobei vorzugsweise die Radiatorrippen als Distanzhalter für die Abdeckung 6 od. dgl. dienen und daher zweckmäßig nicht scharfkantig in herkömmlicher Art, sondern mit verbreiterter Tragfläche nach oben und unten (bei Einbau in Boden oder Decke) ausgebildet sind.

Um unterhalb der Flächenheizung 1e einen Wärmestau mit möglichen Verlusten gegen den Unterboden 22 hin zu vermeiden, wird sie vorzugsweise in an sich bekannter Weise vom Unterboden erhöht angeordnet, wodurch sich auch eine Belüftung von unten her ergibt. Hiezu werden am Rande der Flächenheizung 1e verteilt Distanzhaltesteine 3b angeordnet, die mit Schultern 24 zur Unterstützung der Flächenheizung 1e versehen sind. Auf diese Weise erfüllen diese Distanzhaltesteine 3b eine mehrfache Funktion, indem sie einerseits die Flächenheizung 1e und anderseits die Träger 21 unterstützen, schließlich aber auch als Schikanen für den durchziehenden Luftstrom wirken.

Es wurde bereits erwähnt, daß eine Zwangsumwälzung der Luft von Vorteil sein kann. Die zugehörige Umwälzpumpe kann dann jeweils in einem der Vertikalkanäle 16 untergebracht sein. Dies ist besonders dann vorteilhaft, wenn auch ein Anteil an Frischluft beigemischt werden soll, zumal hiezu nur ein kleiner Durchbruch durch die Mauer 15 erforderlich ist.

Im Rahmen der Erfindung sind zahlreiche verschiedene Ausführungen möglich; so erkennt man beispielsweise aus Fig. 1 an Hand der Klemmkörper 25, daß es prinzipiell auch möglich ist, die Seitenflächen der Noppen 3 mit einem Klemmkörper bildenden Profil, z. B. wellen- oder zickzackförmig, auszubilden. Ferner können die (von oben gesehen) kreisrunden Vorsprünge 3 nach den Fig. 4, 9 oder 10 auch unversetzt wie in Fig. 11, aber entsprechend eng angeordnet sein, um eine Klemmwirkung auszuüben. Ebenso ist es möglich, daß die Noppenbänder 3 gemäß Fig. 6 aus wärmeleitendem oder vorzugsweise wärmespeicherndem Material gebildet sind. Es versteht sich überdies, daß Einzelheiten der in den verschiedenen Figuren gezeigten Ausführungen miteinander kombinierbar sind, wie etwa in einem mit Schikanen versehenen Kanalraum Klemmkörper bzw. Wärmeleitbleche vor-

gesehen sein können. So können auch die Kehlungen 4 gegeneinander derart leicht versetzt und/oder wellen- bzw. zickzackförmig angeordnet und ausgebildet sein, daß sich hiedurch eine Klemmung ergibt. Es ist dabei gleichgültig, ob die Stränge 1 von einem Heiz- oder Kühlmedium durchströmt sind, oder ob es sich um elektrische Heizstränge bzw. -platten (vgl. Fig. 14) handelt.

**Patentansprüche**

1. Anlage zum Temperieren eines Raumes (18), mit wenigstens zwei in einer Wandung des Raumes, insbesondere im Fussboden vorgesehenen Kanalräumen (4, 4a, 23) und einem in wenigstens einem Kanalraum verlaufenden Heiz- und/oder Kühlstrang, wobei Luft durch diese Kanalräume umwälzbar ist, dadurch gekennzeichnet, dass in den Kanalräumen (4, 4a, 23) wenigstens eine Schikane (3, 3a, 9, 9a, 3b) vorgesehen ist, die die Luft von ihrer durch die Verbindung der Ansaug- mit der Ausblasöffnung definierten Hauptströmungsrichtung seitlich in der Ebene der Wandung des Raumes (18) ab-, bzw. umleitet.

2. Anlage nach Anspruch 1, dadurch gekennzeichnet, dass die Schikanen (3, 3a, 9a, 3b) wenigstens einen die Kanalabschnitte (4, 4a) verbindenden Querkanal (5, 5', 5'') bilden.

3. Anlage nach Anspruch 2, dadurch gekennzeichnet, dass der in den Raum (18) mündende Kanalraum (4 bzw. 4a) sowie die Querkanäle (5, 5', 5'') an zwei zueinander senkrechten Seiten durch eine an sich bekannte Platte (2 bzw. 2a) begrenzt ist, die in vorbestimmten Abständen voneinander angeordnete, als Distanzhalter ausgebildete Schikanen (3, 3a) aufweist, die vorzugsweise gegeneinander versetzt sind.

4. Anlage nach Anspruch 3, dadurch gekennzeichnet, dass der Abstand (s) der Fluchtlinien und die Höhe (H) der Schikanen (3, 3a) einen Kanalraum bilden, dessen Querschnittsfläche wenigstens doppelt, insbesondere viermal, so gross wie diejenige des Heiz- und/oder Kühlstranges (1, 1a-1d, 101) ist, wobei die Höhe (H) der Schikanen (3, 3a) vorzugsweise wenigstens doppelt so gross wie die Stärke des Heiz- und/oder Kühlstranges (1, 1a-1d, 101) ist.

5. Anlage nach einem der Ansprüche 2-4, dadurch gekennzeichnet, dass wenigstens ein Querkanal (5 bzw. 5') im Bereiche einer Krümmung (1' bzw. 1a') des Heiz- und/oder Kühlstranges (1, 1a, 101) oder nahe diesem Bereiche vorgesehen ist.

6. Anlage nach einem der Ansprüche 2-5, dadurch gekennzeichnet, dass wenigstens ein Teil der Querkanäle (5, 5', 5'') ebenfalls eine Ein- und Ausmündung in den bzw. einen Raum (18) besitzen, und vorzugsweise von Luft — quer zur Temperiereinrichtung (1, 1a, 101) — durchströmt sind.

7. Anlage nach einem der Ansprüche 2-6, dadurch gekennzeichnet, dass wenigstens ein Teil der Querkanäle (5, 5', 5''), vorzugsweise jeder Querkanal, eine gleich grosse Querschnittsfläche besitzt wie der Längskanal (4 bzw. 4a).

8. Aufbau für eine Temperieranlage, vorzugsweise für eine Strahlungs- und Konvektionsfussbodenheizung, insbesondere nach einem der vorhergehenden Ansprüche, bestehend aus

a) einer mit Vorsprüngen versehenen Platte, vorzugsweise aus isolierendem Material, zwischen welchen Vorsprüngen wenigstens ein von Luft durchströmter Kanalraum gebildet ist, und

b) wenigstens einer in Ausnehmungen der Platte verlaufenden strangförmigen Temperiereinrichtung, insbesondere einem Heizstrang, sowie

c) einem auf den Vorsprüngen ruhenden, gegebenenfalls eine Druckverteilungsschicht umfassenden, Belag, dadurch gekennzeichnet, dass wenigstens eine eine strangförmige Temperiereinrichtung (1, 101) aufnehmende Ausnehmung (4, 5) der Platte (2) selbst oder eines Wärmeleitbleches (27, 27', 27'') an derselben an zumindest einer Seite eine mit als Klemmkörper ausgebildeten Schikanen (3, 25) versehene Begrenzung aufweist.

9. Aufbau nach Anspruch 8, dadurch gekennzeichnet, dass der Aussendurchmesser der strangförmigen Temperiereinrichtung (1, 101), bzw. eines sie vorzugsweise wenigstens zum Teil umhüllenden, insbesondere zumindest teilweise schwarzen, Wärmeleitbleches (27, 27', 27''), geringfügig grösser als der Abstand zwischen den Fluchtlinien (42) der Begrenzung der für ihre Verlegung vorgesehenen Ausnehmung (4, 5) ist.

10. Aufbau nach Anspruch 8 oder 9, dadurch gekennzeichnet, dass die für die Verlegung der strangförmigen Temperiereinrichtung (1) vorgesehene Ausnehmung (5) ein, wellen- oder zickzackförmig verlaufender Kanalraum ist (Fig. 6, 7) wobei gegebenenfalls wenigstens zwei wellen- oder zickzackförmige Kanalräume (5) einander kreuzen (Fig. 7).

11. Aufbau nach einem der Ansprüche 8 bis 10, dadurch gekennzeichnet, dass für die Verlegung der strangförmigen Temperiereinrichtung (1) eine in einem Winkel zu dem von Luft durchströmten Kanalraum (5) an der Oberseite der Schikanen (3) angeordnete, mit seitlichen Klemmkörpern versehene bzw. von ihnen begrenzte Ausnehmung (4) vorgesehen ist (Fig. 1, 4, 5A), wobei gegebenenfalls der Kanalraum (5) an derjenigen Stelle, an der er vom Heiz- und/oder Kühlstrang (1) überquert wird, in seinem Querschnitt erweitert (14) ist.

12. Aufbau nach einem der Ansprüche 8 bis 11, dadurch gekennzeichnet, dass das Wärmeleitblech (27') derart kurz bemessen ist, dass es nur die Oberfläche der Schikanen (3) abdeckt, Querkanäle (5) bzw. Kanalerweiterungen (14) dagegen frei lässt (Fig. 1).

13. Aufbau nach einem der Ansprüche 8 bis 12, dadurch gekennzeichnet, dass das Wärmeleitblech (27) so lang bzw. so tragfähig ist, dass es den in einem Winkel zur Temperiereinrichtung (1) verlaufenden Kanalraum (5) bzw. eine Kanalerweiterung (14) überbrückt (Fig. 1, 4, 6, 7).

## Claims

1. System for tempering a room (18), with at least two duct spaces (4, 4a, 23) located in a closure of the room, especially in the floor, and a elongate heating and/or cooling means extending in at least one duct space, air being capable of circulation through said duct spaces, wherein said duct spaces (4, 4a, 23) contain at least one baffle (3, 3a, 9, 9a, 3b) which deflects or diverts the air from its main direction of flow, said direction being defined by the connection of the intake opening with the discharge opening, laterally into the plane of the closure of the room (18).

2. System as claimed in claim 1, wherein the baffles (3, 3a, 9, 9a, 3b) form at least one transverse duct (5, 5', 5") connecting the duct section (4, 4a).

3. System as claimed in claim 2, wherein the duct space (4 or 4a) discharging into the room (18), as well as the transverse ducts (5, 5', 5"), are limited at two perpendicularly arranged sides by a plate (2 or 2a) which is as such known, said plate having baffles (3, 3a) in the form of spacing elements arranged in predetermined distances from one another, said baffles being preferably staggered.

4. System as claimed in claim 3, wherein the distance (s) between the alignment lines and the height (H) of the baffles (3, 3a) form a duct space, the cross-sectional area of which is at least twice as large, especially four times as large, as that of the elongate heating and/or cooling means (1, 1a-1d, 101), the height (H) of the baffles preferably being at least twice as long as the thickness of the elongate heating and/or cooling means (1, 1a-1d, 101).

5. System as claimed in any one of claims 2-4, wherein at least one transverse duct (5 or 5') is forseen in the area of a bend (1' or 1a') of the elongate heating and/or cooling means (1, 1a, 101), or in the vicinity of said area.

6. System as claimed in any one of claims 2-5, wherein at least some of the transverse ducts (5, 5', 5") have an intake from and a discharge into the or a room (18), and wherein an air flow — transverse to the tempering means (1, 1a, 101) — is preferably present in said transverse ducts.

7. System as claimed in any one of claims 2-6, wherein at least some of the transverse ducts (5, 5', 5"), preferably every transverse duct, has the same cross-sectional area as the elongate duct (4 or 4a).

8. Construction for a tempering system, preferably for a radiation- and convection-type floor heating system, especially as claimed in any one of the preceding claims, consisting of

a) a plate furnished with projections, said projections preferably consisting of insulating material, between which projections at least one duct space through which an air flow passes is formed, and

b) at least one elongate tempering means extending in recesses in the plate, said tempering means comprising especially a heating line, as well as

c) a covering means resting on the projections, said covering means possibly comprising a layer for the purpose of distributing forces,

Wherein at least one recess (4, 5) in the plate (2) itself or in a heat-conducting metal plate (27, 27', 27") on said plate (2) accommodating a elongate tempering means (1, 101) has on at least one side a limitation with baffles (3, 25) in the form of clamping elements.

9. Construction as claimed in claim 8, wherein the outside diameter of the elongate tempering means (1, 101) or of a heat-conducting metal plate (27, 27', 27") preferably at least partially enclosing said tempering means, said heat-conducting metal plate being especially at least partially black, is slightly larger than the distance between the alignment lines (42) of the limitation of the recess (4, 5) provided for the installation of said tempering means.

10. Construction as claimed in any one of claims 8 or 9, wherein the recess (5) provided for the installation of the elongate tempering means (1) is a duct space of wavy or zigzag extension (fig. 6, 7), two wavy or zigzag duct spaces (5) possibly intersecting (fig. 7).

11. Construction as claimed in any one of claims 8 to 10, wherein for the installation of the elongate tempering means (1) a recess (4) arranged in an angle to the duct space (5) in which an air flow is present on the top of the baffles (3), said recess being furnished with or limited by lateral clamping elements, is foreseen (fig. 1, 4, 5A), the cross section (14) of the duct space (5) possibly being enlarged at the point at which it is intersected by the elongate heating and/or cooling means (1).

12. Construction as claimed in any one of claims 8 to 11, wherein the length of heat-conducting metal plate (27') is to be limited such that it covers only the surfaces of the baffles (3), and not the transverse ducts (5) or duct enlargements (14) (fig. 1).

13. Construction as claimed in any one of claims 8 to 12, wherein the heat-conducting metal plate (27) is of such a length or carrying capacity that it bridges the duct space (5) extending in an angle to the elongate tempering means (1) or a duct enlargement (14) (fig. 1, 4, 6, 7).

## Revendications

1. Installation pour le chauffage d'une pièce (18) avec au minimum deux canaux (4, 4a, 23) prévus dans une paroi de la pièce, en particulier dans le plancher et un faisceau de chauffage et/ou de refroidissement logé au minimum dans un canal, de l'air pouvant être mis en circulation à travers ces canaux, caractérisée par le fait qu'une chicane (3, 3a, 9, 9a, 3b) est au minimum prévue dans les canaux (4, 4a, 23), qui dévie ou dérive l'air de sa direction d'écoulement principale définie par la liaison des orifices d'aspiration à l'orifice d'expulsion dans le plan de la paroi de la pièce (18).

2. Installation conforme à la revendication 1, caractérisée par le fait que les chicanes (3, 3a, 9, 9a, 3b) constituent au minimum un canal transversal (5, 5', 5") reliant les sections des canaux (4, 4a).

3. Installation conforme à la revendication 2, caractérisée par le fait que le canal (4 ou 4a) débouchant dans la pièce (18), de même que les canaux transversaux (5, 5', 5") sur deux côtés perpendiculaires entre eux, sont limités par un panneau en soi connu (2 ou 2a), qui présente à des intervalles prédéterminés des chicanes (3, 3a) disposées écartées l'une de l'autre et constituées comme des entretoises, qui sont, de préférence, décalées les unes par rapport aux autres.

4. Installation conforme à la revendication 3, caractérisée par le fait que l'écartement (s) des lignes de fuite et la hauteur (H) des chicanes (3, 3a) constituent un canal dont la surface de la section représente au minimum deux fois, mais de préférence quatre fois, celle du faisceau de chauffage et/ou de refroidissement (1, 1a-1d, 101), la hauteur (H) des chicanes (3, 3a) étant au minimum deux fois plus grande que l'épaisseur du faisceau de chauffage et/ou de refroidissement (1, 1a-1d, 101).

5. Installation conforme à l'une des revendications 1-4, caractérisée par le fait qu'au minimum un canal transversal (5 ou 5') est prévu dans le domaine d'un coude (1' ou 1a') du faisceau de chauffage et/ou de refroidissement (1, 1a, 101), ou à proximité de ce domaine.

6. Installation conforme à l'une des revendications 2-5, caractérisée par le fait qu'au minimum une partie des canaux transversaux (5, 5', 5") possède également une entrée et une sortie débouchant dans une pièce (18) et est de préférence parcourue par de l'air (transversalement au dispositif de chauffage (1, 1a, 101).

7. Installation conforme à l'une des revendications 2-6, caractérisée par le fait qu'au minimum une partie des canaux transversaux (5, 5', 5"), de préférence chaque canal transversal, possède une section d'une surface d'égale importance à celle du canal longitudinal (4 ou 4a).

8. Construction pour une installation de chauffage, de préférence pour un chauffage par le sol à convection et rayonnement, en particulier conforme à l'une des revendications précédentes, constituée

a) d'une plaque pourvue de parties en saillie, de préférence en matériau isolant, saillies entre lesquelles est constitué au minimum un canal, dans lequel s'écoule de l'air et

b) au minimum un dispositif de chauffage en forme de faisceau passant dans les évidements de la plaque, en particulier un faisceau de chauffage, ainsi que

c) un revêtement reposant sur les parties en saillie, le cas échéant comprenant une épaisseur de répartition de charge, caractérisée par le fait qu'au minimum un évidement (4, 5) de la plaque (2) recevant un dispositif de chauffage (1, 101) en forme de faisceau présente lui-même, ou une tôle de déflection de chaleur (27, 27', 27") sur celle-ci, sur au minimum une face une délimitation pourvue de chicanes (3, 25) constituée sous la forme de corps de serrage.

9. Construction conforme à la revendication 8, caractérisée par le fait que le diamètre extérieur du dispositif de chauffage en forme de faisceau (1, 101), ou une tôle de déflection de chaleur (27, 27', 27"), l'enveloppant de préférence au-moins en partie, et en particulier au-moins en partie noire, soit légèrement plus grand que la distance entre les lignes de fuite (42) de la limite de l'évidement (4, 5) prévu pour sa pose.

10. Construction conforme à la revendication 8 ou 9, caractérisée par le fait que l'évidement (5) prévu pour la pose du dispositif de chauffage (1) en forme de faisceau est un canal présentant des ondulations ou des zigzags (fig. 6, 7), le cas échéant au minimum deux canaux (5) de forme ondulée ou en zigzag se croisant entre eux (fig. 7).

11. Construction conforme à l'une des revendications 8 à 10, caractérisée par le fait que pour la pose du dispositif de chauffage (1) en forme de faisceau, est prévu un évidement (4) pourvu de corps de serrage latéraux ou limités par ceux-ci disposés suivant un angle par rapport au canal (5) parcouru par de l'air sur la face supérieure des chicanes (3) (fig. 1, 4, 5A), la section du canal (5) étant le cas échéant élargie (14) sur le point sur lequel il est coupé par le faisceau de chauffage et/ou de refroidissement (1).

12. Construction conforme à l'une des revendications 8 à 11, caractérisée par le fait que la tôle de déflection de chaleur (27') est dimensionnée de façon courte à un point qu'elle ne recouvre que la surface de chicane (3), en laissant par contre libres les canaux transversaux (5) ou les élargissements des canaux (14) (fig. 1).

13. Construction conforme à l'une des revendications 8-12, caractérisée par le fait que la tôle de déflection de chaleur (27) est suffisamment longue ou portante pour recouvrir un élargissement de canal (14) ou un canal (5) présentant un angle par rapport au dispositif de chauffage (1) (fig. 1, 4, 6, 7).

Fig. 1

Fig. 2A

Fig. 2B

Fig. 3A

Fig. 3B

0 097 653

Fig. 4

Fig. 5A

Fig. 5B

2

Fig. 6

Fig. 7

Fig. 8

0 097 653

Fig. 9

Fig. 10

4

0 097 653

Fig.11

Fig.12

5

Fig.13

Fig.14